Europäisches Patentamt

European Patent Office

Office européen des brevets

(19)

(11) Veröffentlichungsnummer: **0 182 311**
**A2**

(12) # EUROPÄISCHE PATENTANMELDUNG

(21) Anmeldenummer: **85114545.8**

(22) Anmeldetag: **15.11.85**

(51) Int. Cl.⁴: **A 01 C 7/10**

(30) Priorität: **17.11.84 DE 3442150**

(43) Veröffentlichungstag der Anmeldung: **28.05.86**
**Patentblatt 86/22**

(84) Benannte Vertragsstaaten: **AT DE FR GB**

(71) Anmelder: **Amazonen-Werke H. Dreyer GmbH & Co. KG,
Postfach 51, D-4507 Hasbergen-Gaste (DE)**

(72) Erfinder: **Gehrke, Rudolf, Lerchenweg 4,
D-2990 Papenburg 1 (DE)**

(74) Vertreter: **Patentanwälte Grünecker, Kinkeldey,
Stockmair & Partner, Maximilianstrasse 58,
D-8000 München 22 (DE)**

(54) **Sämaschine.**

(57) Sämaschine mit einem Rahmen (2) und einem Vorratsbehälter (1), von dem aus über Dosierelemente (14) das im Vorratsbehälter befindliche Saatgut über Leitungsrohre (15) und daran angeschlossene Säschare (5, 6) in den Boden eingebracht wird, wobei an der Sämaschine eine Wegstreckenmeßeinrichtung angeordnet ist. Um eine einfache und genaue Möglichkeit für die Wegstrecken- und Fahrgeschwindigkeitsmessung bei einer Sämaschine zu schaffen, ist die an der Sämaschina angeordnete Wegstreckenmeßeinrichtung (37) als Scheibensech (36) ausgebildet.

# Beschreibung

Die Erfindung betrifft eine Sämaschine gemäß des Oberbegriffes des Anspruchs 1.

Eine derartige Sämaschine ist durch die DE-OS 32 17 010 bekannt. Bei dieser Sämaschine wird ein Laufrad der Sämaschine als Wegstreckenmeßeinrichtung benutzt, wobei an dem Rahmen der Sämaschine ein Reedschalter und an der Felge des Laufrades zwei diametral gegenüberliegende Magnetschalter angeordnet sind. Durch Zählung der Impulse aus dem Reedschalter in Verbindung mit dem Magneten wird die zurückgelegte Wegstrecke pro Zeiteinheit bzw. die tatsächliche Fahrgeschwindigkeit der Sämaschine ermittelt.

Die Messung der zurückgelegten Wegstrecke bzw. die Ermittlung der tatsächlichen Fahrgeschwindigkeit mit einem Laufrad ist sehr ungenau, weil an einem Laufrad ein sehr großer Schlupf auftritt. Hierdurch ist eine ausreichend genaue Wegstreckenmessung nicht möglich.

Weiterhin ist in der Fachzeitschrift "Grundlagen der Landtechnik Bd 33 (1983) Nr. 1 Seiten 14 bis 20" die Messung der Fahrgeschwindigkeit mittels eines Scheibensechses in allgemeiner Form für die Anwendung bei Pflügen beschrieben.

Der Erfindung liegt die Aufgabe zugrunde, eine einfache und genaue Möglichkeit für die Wegstrecken- und Fahrgeschwindigkeitsmessung bei einer Sämaschine zu schaffen.

Diese Aufgabe wird mit den Merkmalen des Anspruchs 1 gelöst.

Infolge dieser Maßnahme wird auf einfachste Weise eine sehr genaue und kostengünstige Möglichkeit für die Messung der zurückgelegten Wegstrecke bei einer Sämaschine geschaffen. Hierbei ist es möglich, die Ausbildung des Scheibenseches genau auf die Anforderungen der Wegstreckenmessung bei einer Sämaschine abzustimmen. In vorteilhafter Weise ist das Scheibensech über eine Halterung an dem Rahmen der Sämaschine angeordnet. Damit keine Seitenkräfte von der Sämaschine auf das Scheibensech übertragen werden, ist erfindungsgemäß vorgesehen, daß die Halterung ein Kreuzgelenk aufweist. Somit wird eine sehr exakte und unverfälschte Wegstreckenmessung erreicht. Weiterhin sieht die Erfindung vor, daß die eine Gelenkachse des Kreuzgelenkes horizontal und quer zur Fahrtrichtung der Sämaschine verläuft, und daß die andere Gelenkachse des Kreuzgelenkes zumindest aufrecht verläuft. Infolge dieser Maßnahme wird ein sehr guter Nachlauf des Scheibenseches erreicht. In einer Ausführungsform ist erfindungsgemäß vorgesehen, daß die aufrecht verlaufende Gelenkachse des Kreuzgelenkes in Betriebsstellung des Scheibenseches unter einem Winkel von der Vertikalen abweichend verläuft. Hierbei wird sichergestellt, daß das Scheibensech beim Ausheben der Sämaschine um die aufrechte Achse an die Sämaschine heranklappt, so daß das Scheibensech die Sämaschine nach hinten nicht wesentlich überragt.

Damit ein sehr guter, gerader und ruhiger Nachlauf des Scheibenseches erreicht wird, sieht die Erfindung vor, daß die Verlängerung der durch das aufrechte Gelenk des Kreuzgelenkes verlaufenden Gelenkachse in einem möglichst großen Abstand von der Drehachse des Scheibenseches die durch die Drehachse des Scheibenweches verlaufende Vertikale schneidet. Ein besonders guter Nachlauf wird dadurch erreicht, daß die Verlängerung der durch das aufrechte Gelenk des Kreuzgelenkes verlaufenden Gelenkachse die Bodenoberfläche in einem großen Abstand vor dem Eintrittspunkt des Scheibenseches in den Boden schneidet.

In einer bevorzugten Ausführung ist erfindungsgemäß vorgesehen, daß das Scheibensech zwischen die quer zur Fahrtrichtung gesehen nebeneinander angeordneten Säscharen angeordnet ist. Infolge dieser Maßnahme wird eine geschützte Anordnung des Scheibenseches erreicht. Weiterhin ergibt sich durch diese Anordnung des Scheibenseches, daß das Scheibensech die Sämaschine nicht nach hinten überragt, so daß das Scheibensech nicht beschädigt werden kann. Durch diese Anordnung des Scheibenseches ergibt sich also keine Verlängerung der Sämaschine.

Um die zurückgelegte Wegstrecke des Scheibenseches bzw. der Sämaschine erfassen zu können, ist erfindungsgmeäß vorgesehen, daß an der Halterung des Scheibenseches eine Aufnahmevorrichtung zum Erfassen der Umdrehungen des Scheibenseches angeordnet ist. Hierbei ist die Aufnahmevorrichtung mit einer Auswerteeinrichtung verbunden, die die zurückgelegte Wegstrecke ermittelt. In vorteilhafter Weise weist die Auswerteeinrichtung einen Mikrocomputer auf.

Weitere Einzelheiten der Erfindung sind den übrigen Unteransprüchen, der Beispielsbeschreibung und den Zeichnungen zu entnehmen. Hierbei zeigen

Fig. 1    eine Sämaschine mit einem Scheibensech in der Seitenansicht,

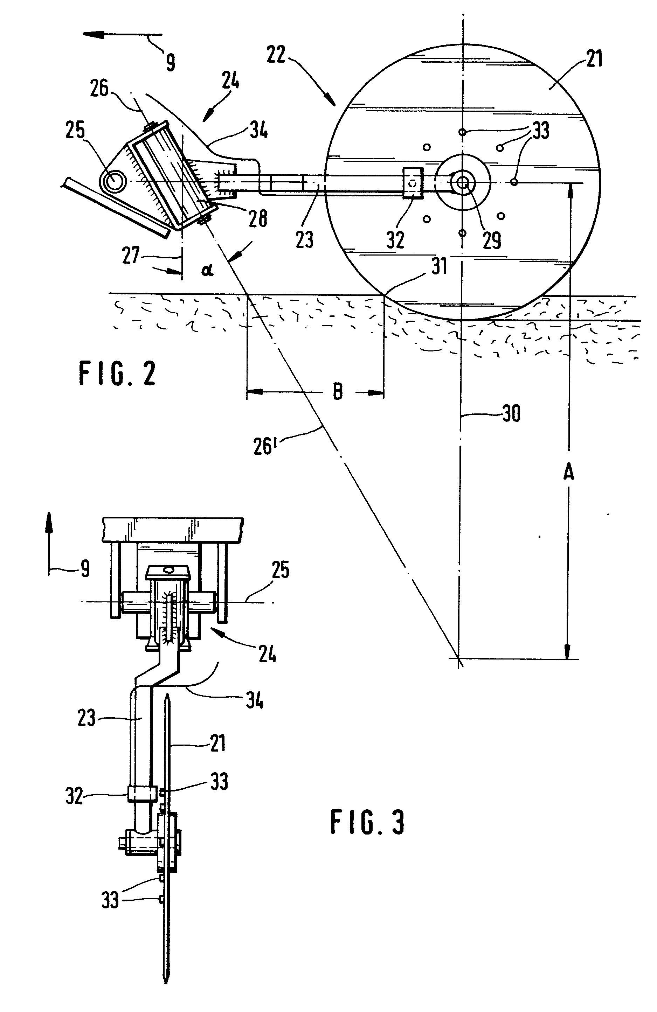

Fig. 2    das Scheibensech gemäß Fig. 1 in vergrößertem Maßstab und in der Seitenansicht,

Fig. 3    das Scheibensech gemäß Fig. 2 in der Draufsicht,

Fig. 4    eine weitere Sämaschine mit einem Scheibensech und

Fig. 5    die Anordnung des Scheibenseches in der Seitenansicht V - V.

Die Sämaschine ist mit einem Vorratsbehälter 1 und und einem Rahmen 2 ausgestattet, der sich über die Laufräder 3 auf der Bodenoberfläche 4 abstützt und an dem die Säschare 5 und 6 mit Hilfe des Scharhalters 7 und 8 in aufrechter Ebene schwenkbar und abwechselnd in zwei in Fahrtrichtung 9 einen Abstand zueinander aufweisenden Reihen 10 angeordnet sind. Zur Veränderung des Bodendruckes befinden sich zwischen den Scharhaltern 7 und 8 und dem Rahmen 2 die an den Lochplatten 11 umsteckbar angebrachten Zugfedern 12. Ferner sind im Rahmen 1 unterhalb der Scharhalter 7 und 8 die Anschlagstücke 13 angebracht, damit die Säschare 5 und 6 beim Anheben der Sämaschine in Transportstellung ebenfalls von der Bodenoberfläche 4 abgehoben werden können.

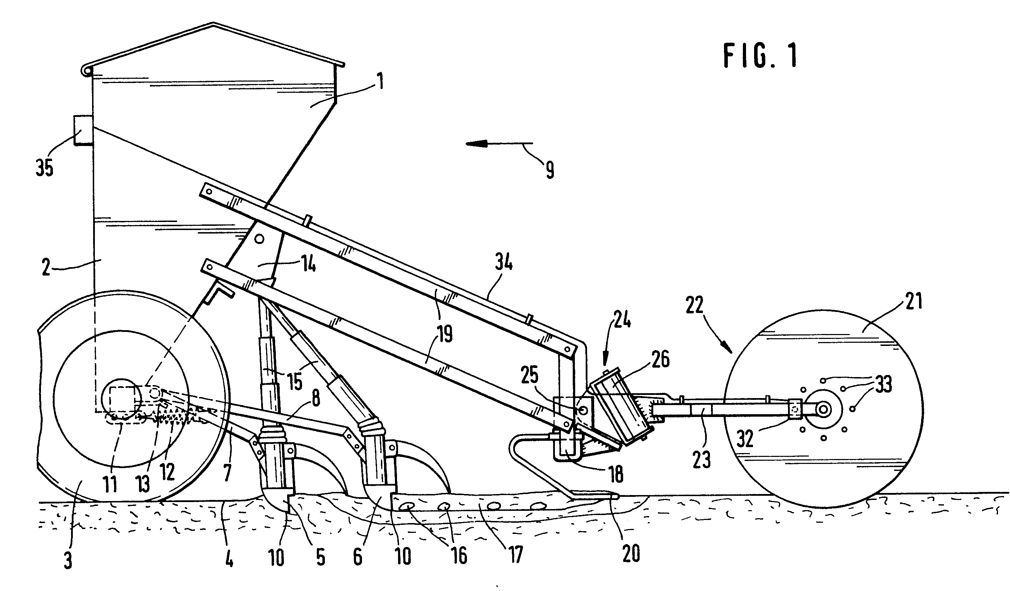

In der in Fig. 1 dargestellten Betriebsstellung wird das im Vorratsbehälter 1 befindliche Saatgut über die Dosiereinrichtung 14 und die Saatleitungsrohre 15 in einstellbaren Mengen den Säscharen 5 und 6 zugeführt, welche die Samenkörner 16 in die von den Säscharen 5 und 6 erzeugten Furchen 17 ablegen.

Hinter den Säscharen 5 und 6 ist die Schiene 18 mit den Streben 19 an der Sämaschine befestigt. An dieser Schiene 18 sind die Zustreicher 20 angeordnet. An dieser Schiene 18 ist die als Scheibensech 21 ausgebildete Wegstreckenmeßeinrichtung 22 angeordnet. Das Scheibensech 21 weist die Halterung 23 auf, mit der es über die Schiene 18 an dem Rahmen 2 der Sämaschine angeordnet ist. Das Scheibensech 21 ist an dem hinteren Ende der Halterung 23 frei drehbar gelagert. Die Halterung 23 weist das Kreuzgelenk 24 auf. Die eine Gelenkachse 25 des Kreuzgelenkes 24 verläuft horizontal und quer zur Fahrtrichtung 9 der Sämaschine und die andere Gelenkachse 26 des Kreuzgelenkes 24 verläuft aufrecht. Diese aufrecht verlaufende Gelenkachse 26 des Kreuzgelenkes 24 verläuft in Betriebsstellung des Scheibenseches 21 unter dem Winkel $\alpha$ von mindestens 5° abweichend von der Verikalen 27. Weiterhin schneidet die Verlängerung 26' der durch das aufrechte Gelenk 28 des Kreuzgelenkes 24 verlaufenden Gelenkachse 26 in einem möglichst großen Abstand A von der
Drehachse 29 des Scheibenseches 21 die durch die Drehachse 29 des Scheibenseches 21 verlaufende Vertikale 30.
Außerdem schneidet die Verlängerung 26' der durch das
aufrechte Gelenk 28 des Kreugelenkes 24 verlaufenden Gelenkachse 26 die Bodenoberfläche 4 in dem großen Abstand
B vor dem Eintrittspunkt 31 des Scheibenseches in den
Boden 4. Hierdurch wird ein guter, gerader Nachlauf des
Scheibenseches 21 erreicht. Andererseits wird durch die
Schrägstellung der Gelenkachse 26 erreicht, daß das
Scheibensech beim Ausheben der Sämaschine nach vorneunten direkt an die Schiene 18 heranklappt.

An der Halterung 23 des Scheibenseches 21 ist die als
Magnetschalter 32 ausgebildete Aufnahmevorrichtung zum
Erfassen der Umdrehungen des Scheibenseches 21 angeordnet.
Weiterhin sind auf dem Scheibensech 21 die Impulsgeberklötze 33 befestigt. Der Magnetschalter 32 ist über das
Kabel 34 mit der an der Sämaschine in dem Kasten 35
untergebrachten Auswerteeinrichtung verbunden. Die Auswerteeinrichtung errechnet aus den Impulsen, die der
Magnetschalter an die Auswerteeinrichtung übermittelt,
die zurückgelegte Wegstrecke bzw. die jeweils aktuelle
Fahrgeschwindigkeit. Weiterhin weist die Auswerteeinrichtung eine Anzeige auf, die an dem Kasten 35 angeordnet
ist. In vorteilhafter Weise kann die Auswerteeinrichtung
einen Mikrocomputer aufweisen, der zusätzlich noch die
ausgebrachte Menge der Samenkörner in Abhängigkeit von
der Fahrgeschwindigkeit regelt.

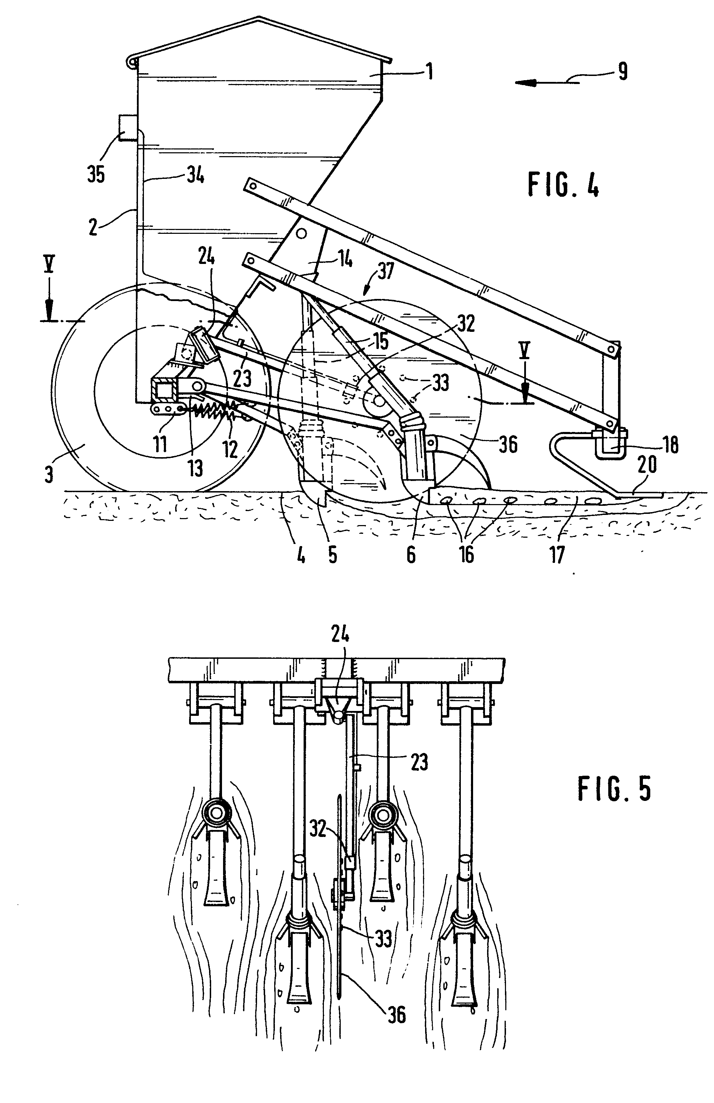

Bei dem Ausführungsbeispiel gemäß Fig. 4 und 5 ist die als
Scheibensech 36 ausgebildete Wegstreckenmeßeinrichtung 37
zwischen den quer zur Fahrtrichtung 9 gesehen nebeneinander angeordneten Säscharen 5 und 6 angeordnet. Hierbei
überragt das Scheibensech 36 die Säschare 5 und 6 nach
hinten nicht wesentlich. Außerdem ist das Scheibensech
36 vor der Schiene 18, an der die Zustreicher 20 befestigt sind, angeordnet. Somit befindet sich das Scheibensech 36 in einem geschützten Raum. Die Halterung 23 mit dem Kreuzgelenk 24 für das Scheibensech 36 entspricht im wesentlichen der Halterung 23 für das Scheibensech 21. Ebenfalls ist an der Halterung 23 für das Scheibensech 36 die Aufnahmeeinrichtung, die die an der Halterung 23 angeordneten Magnetschalter 32 und die an dem Scheibensech 36 angeordneten Impulsgeberklötze 33 aufweist, angeordnet. Die Magnetschalter 32 sind ebenfalls über ein Kabel 34 mit der an der Sämaschine in dem Kasten 35 untergebrachten Auswerteeinrichtung verbunden.

0182311

AMAZONEN-WERKE

H. Dreyer GmbH & Co. KG

Postfach 51

4507 Hasbergen-Gaste

EP 2649-111/Ms

## S ä m a s c h i n e

## P a t e n t a n s p r ü c h e

1. Sämaschine mit einem Rahmen (2) und einem Vorratsbehälter (1), von dem aus über Dosierelemente (14) das im Vorratsbehälter befindliche Saatgut über Leitungsrohre (15) und daran angeschlossene Säschare (5, 6) in den Boden eingebracht wird, wobei an der Sämaschine eine Wegstreckenmeßeinrichtung (22, 37) angeordnet ist, dadurch gekennzeichnet, daß die an der Sämaschine angeordnete Wegstreckenmeßeinrichtung (22,37) als Scheibensech (21, 36) ausgebildet ist.

2. Sämaschine nach Anspruch 1, dadurch gekennzeichnet, daß das Scheibensech (21, 36) über eine Halterung (23) an dem Rahmen (2) der Sämaschine angeordnet ist.

3. Sämaschine nach Anspruch 2, dadurch gekennzeichnet, daß die Halterung (23) ein Kreuzgelenk (24) aufweist.

4. Sämaschine nach Anspruch 3, dadurch g e k e n n - z e i c h n e t, daß die eine Gelenkachse (25) des Kreuzgelenkes (24) horizontal und quer zur Fahrtrichtung (9) der Sämaschine verläuft, und daß die andere Gelenkachse (26) des Kreuzgelenkes (24) zumindest aufrecht verläuft.

5. Sämaschine nach Anspruch 4, dadurch g e k e n n - z e i c h n e t, daß die aufrecht verlaufende Gelenkachse (26) des Kreuzgelenkes (24) in Betriebsstellung des Scheibenseches (21, 36) unter einem Winkel ( $\alpha$ ) von der Vertikalen (27) abweichend verläuft.

6. Sämaschine nach Anspruch 5, dadurch g e k e n n - z e i c h n e t, daß der Winkel ( $\alpha$ ) größer als $5^{\circ}$ ist.

7. Sämaschine nach Anspruch 5, dadurch g e k e n n - z e i c h n e t, daß die Verlängerung (26') der durch das aufrechte Gelenk (28) des Kreuzgelenkes (24) verlaufenden Gelenkachse (26) in einem möglichst großen Abstand (A) von der Drehachse (29) des Scheibenseches (21, 36) die durch die Drehachse (29) des Scheibenseches (21, 36) verlaufende Vertikale (30) schneidet.

8. Sämaschine nach Anspruch 5, dadurch g e k e n n - z e i c h n e t, daß die Verlängerung (26') der durch das aufrechte Gelenk (28) des Kreuzgelenkes (24) verlaufenden Gelenkachse (26) die Bodenoberfläche (4) in einem großen Abstand (B) vor dem Eintrittspunkt (31) des Scheibenseches (21, 36) in den Boden (4) schneidet.

9. Sämaschine nach wenigstens einem der vorangegangenen Ansprüche, dadurch g e k e n n z e i c h n e t, daß das Scheibensech (36) zwischen den quer zur Fahrtrichtung (9) gesehen nebeneinander angeordneten Säscharen (5,6) angeordnet ist.

10. Sämaschine nach Anspruch 9, dadurch g e k e n n-

zeichnet, daß das Scheibensech (36) die Säschare (5,6) nach hinten nicht wesentlich überragt.

11. Sämaschine nach Anspruch 9, wobei hinter den Säscharen eine quer zur Fahrtrichtung verlaufende Schiene
angeordnet ist, dadurch g e k e n n z e i c h n e t,
daß sich das Scheibensech (36) vor der Schiene (18)
befindet.

12. Sämaschine nach Anspruch 1, wobei hinter den Säscharen eine quer zur Fahrtrichtung verlaufende Schiene
angeordnet ist, dadurch g e k e n n z e i c h n e t,
daß das Scheibensech (21) hinter der Schiene (18) angeordnet ist.

13. Sämaschine nach Anspruch 12, dadurch g e k e n n -
z e i c h n e t, daß die Halterung (23) an der Schiene
(18) befestigt ist.

14. Sämaschine nach wenigstens einem der vorangegangenen Ansprüche, dadurch g e k e n n z e i c h -
n e t, daß an der Halterung (23) des Scheibenseches
(21, 36) eine Aufnahmevorrichtung zum Erfassen der Umdrehungen des Scheibenseches (21, 36) angeordnet ist.

15. Sämaschine nach Anspruch 14, dadurch g e k e n n -
z e i c h n e t, daß die Aufnahmevorrichtung (32) mit
einer Auswerteeinrichtung verbunden ist.

16. Sämaschine nach Anspruch 15, dadurch g e k e n n -
z e i c h n e t, daß die Auswerteeinrichtung eine Anzeige aufweist.

17. Sämaschine nach Anspruch 15, dadurch g e k e n n -
z e i c h n e t, daß die Auswerteeinrichtung einen
Mikrocomputer aufweist.

FIG. 1

0182311

FIG. 2

FIG. 3

FIG. 4

FIG. 5